# EUROPEAN PATENT APPLICATION

(11) **EP 0 644 403 A1**
(43) Date of publication of application: **22.03.1995**
(21) Application number: 94306789.2
(22) Date of filing: 16.09.1994
(51) Int. Cl.: G01F 1/84

(54) **Coriolis type mass flow meter**

(30) Priority: 21.09.1993 JP 235156/93
(71) Applicant: FUJI ELECTRIC CO. LTD., Kawasaki 210 (JP)
(72) Inventor: Yoshimura, Hiroyuki, Kawasaki-ku, Kawasaki 210 (JP); Kashimura, Osamu, Kawasaki-ku, Kawasaki 210 (JP)
(74) Representative: Topley, Paul

(57) **Abstract**

To achieve high precision measurement of mass flow rate by equalising the output amplitude values of upstream and downstream sensors without causing a lowering of the mechanical Q of the vibrating system , in a Coriolis type mass flow meter, one of the upstream and downstream sensors comprises a permanent magnet 2 mounted on a tube 15 and an induction coil 75, mounted on a base 3, the output voltage amplitude of the induction coil 75 being fixed. Another sensor comprises a ferromagnetic member 72 mounted on the tube 15 and a pair formed by an excitation coil 70 and an induction coil 71 mounted on the base 3. The output voltage amplitude of the induction coil 71 is controlled to be coincident with the output voltage amplitude of the induction coil 75 by adjusting a DC current flowing through the excitation coil 70.

## Description

The present invention relates to a Coriolis type mass flow meter which measures mass flow rate of a fluid by detecting phase difference between vibrations on the up and down stream sides of a tube, through which the fluid flows, which are excited by the Coriolis force which depends on the mass and velocity of the fluid.

Figure 8 explains the operational principle of a general Coriolis type mass flow meter.

In Figure 8, reference numeral 1 designates a U-shaped tube through which a fluid to be measured flows. A permanent magnet 2 is fixed to the bottom portion of the U-shaped tube 1. Both ends of the U-shaped tube 1 are fixed to a base 3. Reference numeral 4 designates an electromagnetic drive coil which is disposed in a manner such that the drive coil 4 sandwiches the tube 1, and a support frame 5 tightly fixed to the base 3 for supporting the drive coil 4. The U-shaped tube 1 has its vibration nodes at the portions fixed to the base 3 and a structure like a tuning fork which minimises vibration energy loss. Reference numerals 11 and 12 designate electromagnetic pickups for detecting displacement of both arms of the U-shaped tube 1. The Coriolis force is generated in the fluid flowing through the U-shaped tube 1 by vibrating the tube 1 at its normal frequency ω by an electromagnetic force acting between the drive coil 4 and the permanent magnet 2 fixed to the tube 1 and opposed to the drive coil 4.

Figure 9 shows a vibration mode of the U-shaped tube 1.

The strength of the Coriolis force is proportional to the mass and velocity of the fluid flowing through the tube 1, and its direction coincides with the direction of the vector product of the direction of motion of the fluid and the angular velocity at which the tube 1 is vibrated. Since the directions of motion of the fluid are opposite to each other on the inlet and outlet sides of the U-shaped tube 1, the Coriolis forces act in the opposite directions on both arms of the U-shaped tube 1 to generate a torsional torque in the U-shaped tube 1. The torsional torque changes at the same frequency with the excitation frequency at which the tube 1 is vibrated and its amplitude value is proportional to the mass flow rate of the fluid. Figure 10 shows the vibration mode excited by the torsional torque.

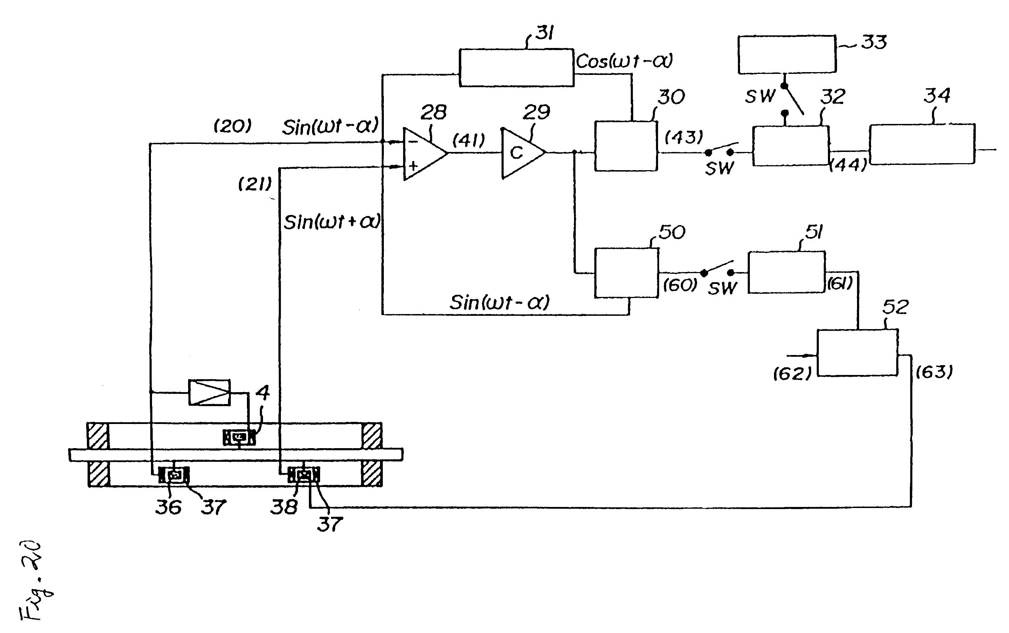

The mass flow rate of the fluid can be measured by detecting torque amplitude of the torsional vibration with the pickups 11 and 12. Since, in an actual vibration of the U-shaped tube 1, the torsional vibration by the Coriolis force is superimposed onto the excitation vibration by the electromagnetic drive coil 4, the vibration on the upstream side is expressed as sin(ωt - α) and the vibration on the downstream side as sin(ωt + α). Therefore, signals e1 and e2 detected by the pickups 11 and 12 respectively show waveforms having a phase difference Δt between them as illustrated in Figure 11. The phase difference Δt depends on the tube and the excitation frequency. In the case of the U-shaped tube 1 with a resonance frequency of 80 Hz, a phase difference of about 120 µS is obtained at the maximum flow rate of 18 kg/min. Therefore, resolution of 60 nS is required in the time measurement, if we want to guarantee the resolution of 1% in one-twentieth of this 120 µS dynamic range.

The simplest method, among the various methods proposed, for measuring the phase difference counts numbers of reference clock pulses corresponding to pulse width of a time difference gate pulse. Figure 12 shows a block diagram of a circuit used for the phase difference measuring method. In Figure 12, an upstream pickup signal 20 and a downstream pickup signal 21 are amplified by amplifiers 22 with amplification factor C and the amplified signals are digitised to binary signals by comparators 23. An exclusive OR circuit 24 applies an exclusive-OR operation to the binary signals to obtain a gate pulse 25, the pulse width of which corresponds to the time difference between the upstream and downstream pickup signals. A counter 26 measures the pulse width of the gate pulse 25 in cooporation with a reference clock 27. In this case, a reference clock pulse frequency of more than 20 MHz is required.

In practice, the U-shaped tube has drawbacks such as pressure loss and difficulty of cleaning caused by its curved tube. To solve these problems, straight tube Coriolis type mass flow meters have been proposed, an example of which is shown in Figure 13.

In Figure 13, reference numeral 15 designates a straight tube through which the fluid to be measured flows. The permanent magnet 2 is fixed at the central portion of the tube 15 and both ends of the tube 15 are fixed to the base 3. Reference numeral 4 designates an electromagnetic drive coil which is disposed in a manner such that the drive coil 4 sandwiches the straight tube 15, and a support frame 5 tightly fixed to the base 3 for supporting the drive coil 4. Since the straight tube shows high rigidity and is harder to bend than the U-shaped tube, the above described time difference for the straight tube becomes much smaller than that for the U-shaped tube.

In the case of the straight tube 15 which usually shows a resonant frequency of 1 kHz, a phase difference of about 2 µS is obtained at the maximum flow rate of 18 kg/min. Therefore, resolution of 1 nS is required in the time measurement, if a resolution of 1% in one-twentieth of this 2 µS dynamic range is required. In addition to this, if the above described measuring method using a counter is applied, a reference clock of 1 GHz is required, and such a clock is difficult to manufacture. Even if the reference clock of 1 GHz is obtained, the counter method further requires a comparator for obtaining the time difference signal. The comparator may be subject to fluctuations caused by a dead band of the input signal and it is thus difficult to obtain a precision of 1 nS. Here, intermediate levels between "1" and "0" of the signal output from the comparator are designated as a dead band, and the speed at which the input signal crosses the dead band greatly affects the fluctuations.

Because of the reasons described above, a Coriolis type mass flow meter according to the prior art is constructed as shown in Figure 14. The mass flow meter of Figure 14 conducts measurement and subtracts the upstream pickup signal 20 from the downstream pickup signal 21 in a difference calculation circuit (subtracter) 28 to obtain a weak phase signal with amplitude of sinα in which the phase α is 0.1 nS for the cycle of 1 mS.$\text{sin(ωt + α) - sin(ωt - α) = 2cosωt . sinα}$

An amplifier 29 amplifies the phase signal thus obtained with high amplification factor and a frequency multiplier 31 obtains cosωt by advancing the phase of an excitation current sinωt of the electromagnetic drive coil by 90 degrees. A sign controller 30 switches the sign of its output by outputting C.sinα.cosωt when cosωt is a positive value and C.(-cosωt.sinα) when cosωt is a negative value. The sign controller obtains sign control timing not from waveforms which are the objects of the sign control but from the other signal to reduce the likelihood of malfuction due to noise.

There are many techniques for measuring the thus obtained C.sinα.cosωt. When one measures the C.sinα.cosωt as a time span with a microcomputer, a value C.sinα is converted in a comparator 34 to a corresponding pulse width by initially charging a capacitor with a current corresponding to C.sinα.cosωt during several cycles as indicated by 44 in Figure 14, then discharging the capacitor through a constant current circuit 33 by switching a switch SW and measuring a time span between the time at which the switch SW is switched and the time at which the output of an integral circuit 32 crosses a predetermined threshold. The phase difference is then obtained by measuring the pulse width with the microcomputer. Since the sinα is very small, it is approximated by α in Figure 14.

Figure 15 shows signal waveforms of major parts of Figure 14 when the amplitude values of the upstream and downstream detection signals are the same and the sign control signal synchronises with cosωt. These signals are expressed by the following equations:${\text{V}}_{\text{U}} \text{= A . sin(ωt - α) : upstream detection signal 20}$${\text{V}}_{\text{D}} \text{= A . sin(ωt + α) : downstream detection signal 21}$${\text{V}}_{\text{v}} \text{= 2A.sinα.cosωt n = m} \text{: upstream/downstream difference signal 41}$${\text{V}}_{\text{s}} \text{= Rectangular Wave[Σcos(2n+1)ωt - α] n = 0} \text{: sign control signal 42}$${\text{V}}_{\text{c}} \text{= | C.2A.sinα.cosωt |} \text{: upstream/downstream difference signal after sign control processing 43}$${\text{V}}_{\text{i}} \text{= ∫| C.2A.sinα.cosωt | dt} \text{: integral signal 44}$

However, the phase measurement described above is applicable only when the amplitude values of the upstream and downstream detection signals coincide with each other and an error is caused by a difference between the amplitude values of the detection signals which is expressed by the following equations. The reference symbols are as follows:
ω : resonance frequency of a vibrating tube
α : phase difference generated by mass flow rate
A : amplitude of downstream detection signal
B : amplitude of upstream detection signal
C : amplification factor
1. Output of the subtracter Vᵥ${\text{V}}_{\text{v}} \text{= A.sin(ωt + α) - B.sin(ωt - α)} \text{= 2A.sinα.cosωt - (B-A).sin(ωt - α)}$
2. Sign control signal Vₛ
   The sign control signal Vₛ typically corresponding to cosωt is obtained by frequency multiplying the input current sinωt of the drive coil.${\text{V}}_{\text{s}} \text{= +1 when cosωt ≧ 0,}$ and${\text{V}}_{\text{s}} \text{= -1 when cosωt < 0.}$
3. Output of the sign controller V_{c}${\text{V}}_{\text{c}} {\text{∝ V}}_{\text{s}} \text{.C.[2A.sinα.cosωt - (B-A).sin(ωt - α)]}$
4. Output of the integration circuit Vᵢ 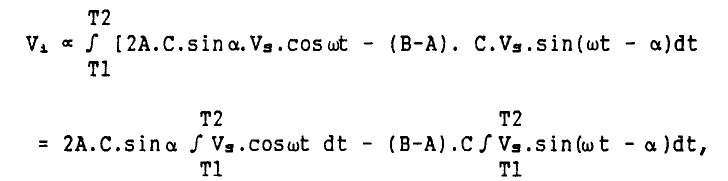 where T1=0 and T2=4 π.

As described above, a difference occurs in the output Vᵢ of the integral circuit, as the second term of the above equation expresses, caused by the difference of the amplitude values (B≠A), which further causes an integration error.

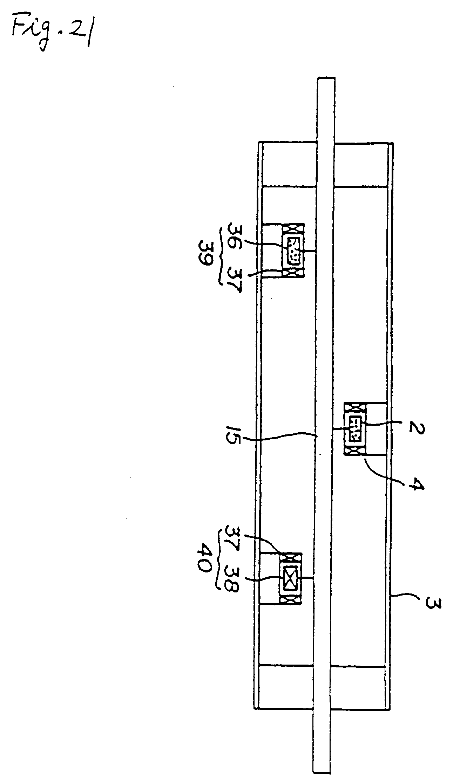

Figure 16 shows an error expressed by the following equation when the vibration frequency of the vibrating tube is 1 kHz and the generated time difference is 2 µS.$\text{error =} \frac{\text{∫(B≠A) - ∫ (B=A)}}{\text{∫ (B=A)}} \text{.10²,}$
where ∫ (B=A) expresses an integration value when the amplitude values are the same, and ∫(B≠A) an integration value when the amplitude values are different.

We know from Figure 16, the error as defined above is 0.5% of the indicated value when the amplitude value difference is 1% (upstream/downstream amplitude value ratio is 101%). The amplitude value difference is reduced to some extent, for example by an AGC amplifier (automatic gain control amplifier) 35, as shown in Figure 17, which can vary its amplification factor. However, it is difficult to achieve the target error of 0.01% by installation of the AGC amplifier, because the AGC amplifier causes phase delay which varies with the amplification factor of the AGC amplifier as shown in Figure 18.

To solve these problems, it was proposed in as yet unpublished Japanese Patent Application number H05-110802, a mass flow meter comprising a first pickup further comprising a permanent magnet and a first detection coil whose output is fixed; and a second pickup further comprising an electromagnet and a second detection coil positioned opposite the electromagnet, in which an input DC current to the electromagnet is controlled so as to equalise the output signal amplitude of the first and second detection coils.

Figure 19 is a diagram showing a configuration of such a flow meter.

As shown in Figure 19, the flow meter comprises a first fixed output type pickup 39 for detecting velocity of a fluid to be measured which includes a permanent magnet 36 and a first detection coil 37, and a second, variable output type, pickup 40, whose output signal amplitude is controlled so as to be equalised to the output signal amplitude of the first pickup and, which includes an electromagnet 38 and a second detection coil 37.

The output signal amplitude values of the first and second pickups are equalised by controlling the intensity of the line of magnetic force interlinking the second detection coil 37 by adjusting the input DC current to the electromagnet 38 to vary the intensity of the line of magnetic force which the electromagnet 38 generates.

In Figure 19, the permanent magnet 36 and the electromagnet 38 are fixed to the straight tube 15. The permanent magnet 36 and the electromagnet 38 are excited to vibrate in the same modes with the straight tube 15 to detect variation of the line of magnetic force which interlinks the detection coil 37. As an alternative, the permanent magnet 36 and the electromagnet 38 may be fixed to the base 3 to which the detection coil 37 is fixed. In this case, magnetic paths from the permanent magnet 36 and the electromagnet 38 may preferably be cut by the straight tube 15.

An example of a control circuit for equalising the outputs of the fixed and variable output type pickups is shown in Figure 20.

The control circuit of Figure 20 calculates the difference between the upstream pickup signal 20 and the downstream pickup signal 21 by the subtracter 28, and obtains a weak phase signal 2A.sinα.cosωt, with amplitude of sinα in which the phase α is 0.1 nS for a cycle of 1 mS, and the upstream/downstream output amplitude value difference signal (B-A).cos(ωt - α). The control circuit amplifies the phase signal with high amplification factor C by the amplifier 29 and switches the sign of the phase signal by a sign controller 50 which obtains a signal in-phase with the input signal when the upstream pickup signal sin(ωt - α) is positive and an antiphase signal to the input signal when the upstream pickup signal sin(ωt - α) is negative.

As a result of this sign control, only a signal which is in-phase with sin(ωt - α), that corresponds to a term representing the output amplitude value difference between the upstream and downstream pickups, is obtained. The obtained signal is then integrated during n cycles (4 cycles in this example) by an integration circuit 51. The above described data processing operations are expressed by the following equations:
(a) Output of the subtracter Vᵥ${\text{V}}_{\text{v}} \text{= A.sin(ωt + α) - B.sin(ωt - α)} \text{= 2A.sinα.cosωt - (B-A).sin(ωt - α)}$
(b) Sign control signal Vₛ1
   The control signal Vₛ1 is obtained from the output waveform sin(ωt - α) of the upstream detector.${\text{V}}_{\text{s}} \text{1 = +1 when sin(ωt - α) ≧ 0,}$ and${\text{V}}_{\text{s}} \text{1 = -1 when sin(ωt - α) < 0.}$
(c) Output of the sign controller V_{c}1${\text{V}}_{\text{c}} {\text{1 ∝ V}}_{\text{s}} \text{1.C. [2A.sinα.cosωt + (B-A).sin(ωt - α)]}$
(d) Output of the integration circuit Vᵢ1

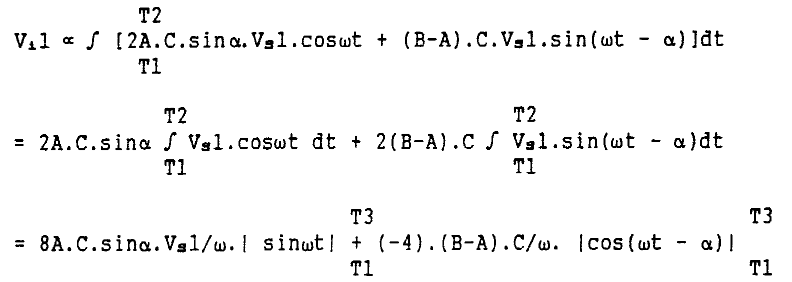

If we choose the limits of integration as follows:
T1 : α/ω,
T2 : α/ω + 4π and
T3 : α/ω + 2π,
the above Vᵢ1 (61 in Figure 20) is expressed by the following equation:

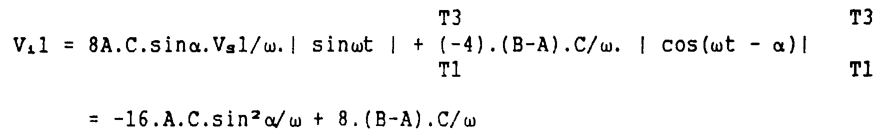

The first term of the above equation represents an integral value when no amplitude difference remains and the second term represents an integral value when the amplitude difference remains. The first term can be neglected since the sin²α in the first term is sufficiently smaller than 1.

An output of the integration circuit 51 is fed to an excitation current setting circuit 52. The output amplitude values of the both detectors are equalised by controlling the electromagnet 38 of the variable output type pickup, with the output of the excitation current setting circuit 52.

Thus, it becomes possible to equalise the output amplitude values of the upstream and downstream pickups by the AGC technique which controls the intensity of the line of magnetic force without causing any phase delay. In the above example, one of the pickups (the fixed output type pickup) comprises the permanent magnet 36 and the detection coil 37 and another pickup, which is controlled, comprises the DC electromagnet 38 and the detection coil 37. Electromagnets may be used for the both magnets. In this case, the DC excitation current of one of the electromagnets is fixed and the DC excitation current of the other electromagnet is controlled.

In Figure 19, the permanent magnet 36 and the electromagnet 38 are fixed to the straight tube 15. The permanent magnet 36 and the electromagnet 38 are excited to vibrate in the same mode with the straight tube 15 to detect variation of the line of magnetic force which interlinks the detection coil 37. As an alternative, the permanent magnet 36 and the electromagnet 38 may be fixed to the base 3 to which the detection coil 37 is fixed. In this case, magnetic paths from the permanent magnet 36 and the electromagnet 38 may preferably be cut by the straight tube 15.

Figure 21 shows a modification of Figure 19. The flow meter of Figure 21 is obtained by constructing a magnetic field generation portion of Figure 20 with a permanent magnet 36 and a DC electromagnet 38. The permanent magnet 36 functions as a bias magnetic field and the DC electromagnet 38 functions as an output adjuster of the detection coil 37. The other functions are the same as those of Figure 20 and their explanations are omitted.

The proposed flow meter suffers from the following drawbacks since lead wires, for feeding the excitation current to the DC electromagnet disposed on the side of the tube, are extended from the base towards the tube.
(1) Possibility of breaking of wire is high.
(2) The lead wires function as a load on the vibrating system and cause lowering of mechanical Q of the vibrating system.

Therefore, an object of the present invention is to provide a Coriolis type mass flow meter which improves measurement precision by eliminating the reduction in mechanical Q and by controlling the output amplitude values of the upstream and downstream pickups at a constant value.

The object of the present invention is achieved by a Coriolis type mass flow meter, including first and second electromagnetic velocity detectors which detect asymmetric bending vibrations of a vibrating tube, which depend on mass flow rate and are excited in association with torsional vibrations of the tube vibrated by Coriolis force generated by the flow of a fluid through the tube and angular vibrations of the tube; a control means for automatically equalising output voltage amplitude of the first detector with the output voltage amplitude of the second detector; and a means for measuring the mass flow rate of the fluid by detecting phase difference between the output waveforms of the detectors. The mass flow meter is further constructed as follows.

In the Coriolis type mass flow meter of the present invention, the first detector is preferably comprises a ferromagnetic member disposed on the side of the tube, an excitation coil, and a first induction coil, in which the excitation and first induction coils are disposed on the side of a base; the second detector is preferably comprises a permanent magnet disposed on the side of the tube, and a second induction coil disposed on the side of the base, in which output voltage amplitude of the second induction coil is fixed; and the control means controls an input DC current of the excitation coil to vary the intensity of a magnetic field generated by the excitation coil to equalise the output voltage amplitude of the first induction coil and the output voltage amplitude of the second induction coil.

In a further advantageous development, the first detector comprises a ferromagnetic member disposed on the side of the tube and a self-induction coil disposed on the side of a base; the second detector comprises a permanent magnet disposed on the side of the tube and an induction coil of fixed output amplitude disposed on the side of the base; and the control means controls an input DC current to the self-induction coil to vary the intensity of a magnetic field generated by the self-induction coil to equalise the output voltage amplitude of the self-induction coil and the output voltage amplitude of the induction coil.

In yet another advantageous embodiment, the first detector comprises a first ferromagnetic member disposed on the side of the tube, a first excitation coil, and a first induction coil, in which the first excitation and induction coils are disposed on the side of a base; the second detector comprises the second ferromagnetic member disposed on the side of the tube, the second excitation coil, and the second induction coil, in which the second excitation and induction coils are disposed on the side of the base; and the control means fixes an input DC current to the second excitation coil at a fixed value for maintaining output voltage amplitude of the second induction coil at a fixed value, and controls an input DC current to the first excitation coil to vary the intensity of the magnetic field generated by the first induction coil to equalise the output voltage amplitude of the first induction coil and the output voltage amplitude of the second induction coil.

In yet a further advantageous arrangement, the first detector comprises the first ferromagnetic member disposed on the side of the tube and the first self-induction coil disposed on the side of a base; the second detector comprises the second ferromagnetic member disposed on the side of the tube and the second self-induction coil disposed on the side of the base; and the control means fixes an input DC current to the second self-induction coil at a fixed value for maintaining the output voltage amplitude of the second self-induction coil at a fixed value, and controls an input DC current to the first self-induction coil to vary the intensity of a magnetic field generated by the first self-induction coil to equalise the output voltage amplitude of the first self-induction coil with the output voltage amplitude of the second self-induction coil.

By configuring one of the upstream and downstream tube vibration velocity sensors as a ferromagnetic member disposed on the tube side, and a self-induction coil or a pair comprising an excitation coil and an induction coil disposed on the base side, the lowering of the mechanical Q of the vibrating system and the appearance of a time delay in AGC are avoided. As a result, highly reliable measurement of phase difference between the detection coil outputs is facilitated.

The present invention will now be described in detail, with reference to the accompanying drawings in which:

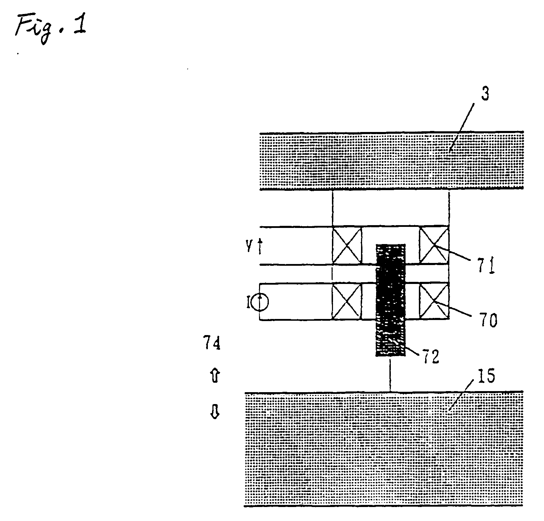

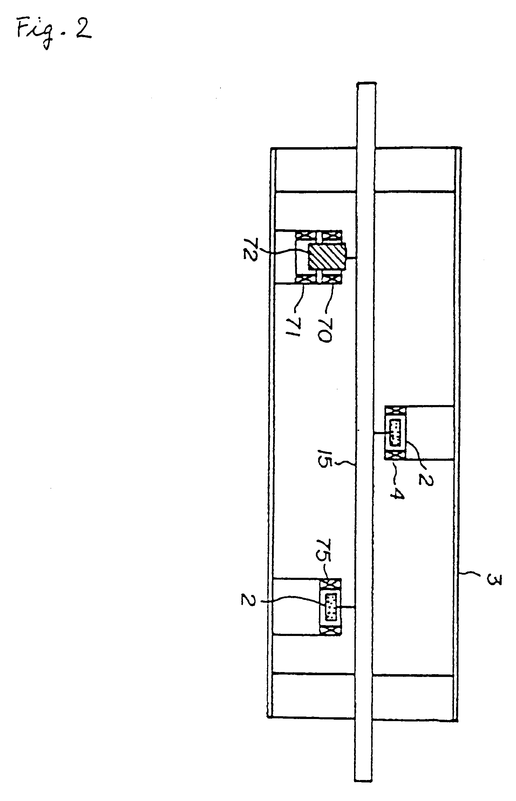

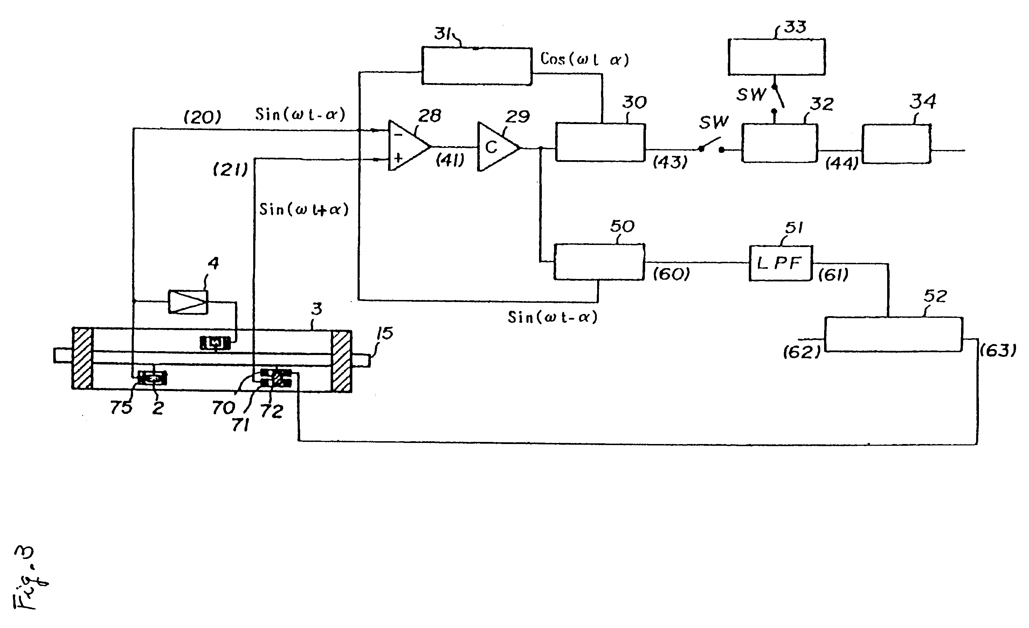

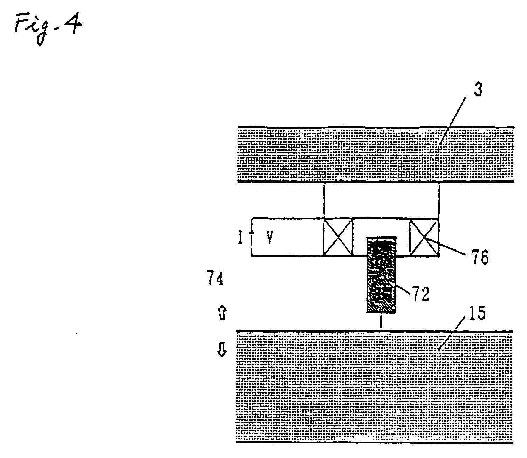

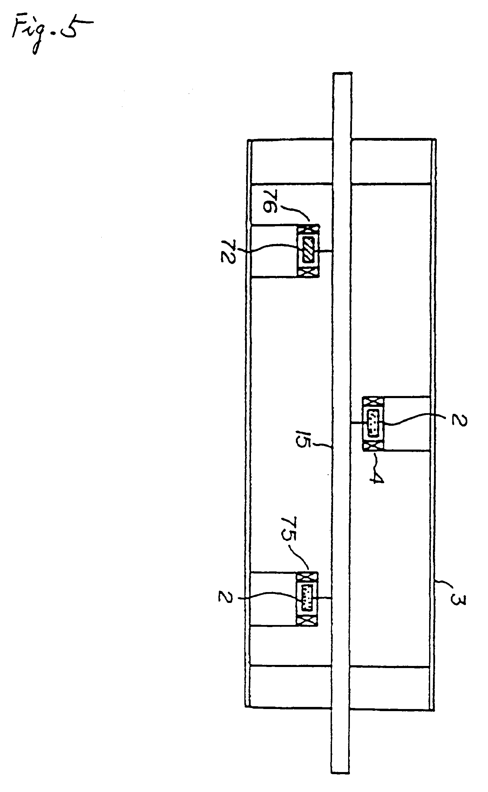

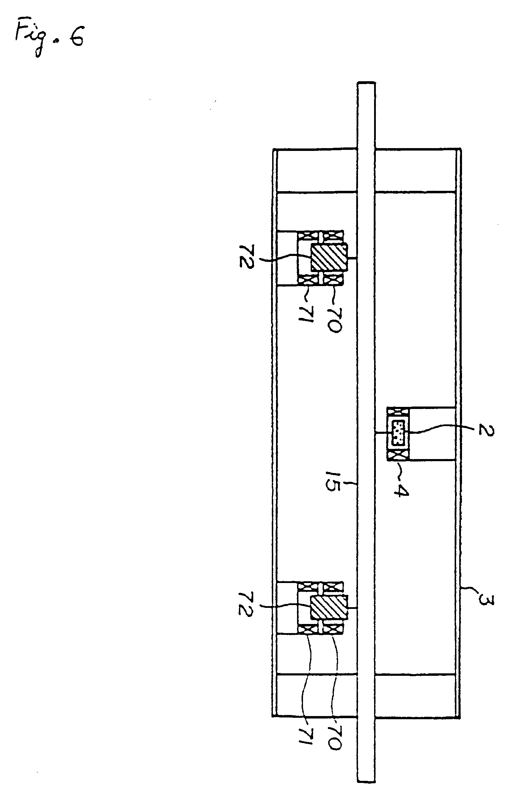

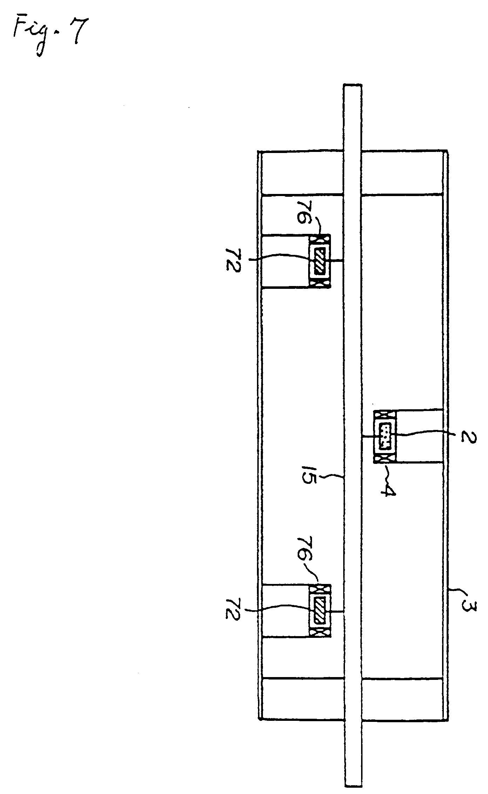

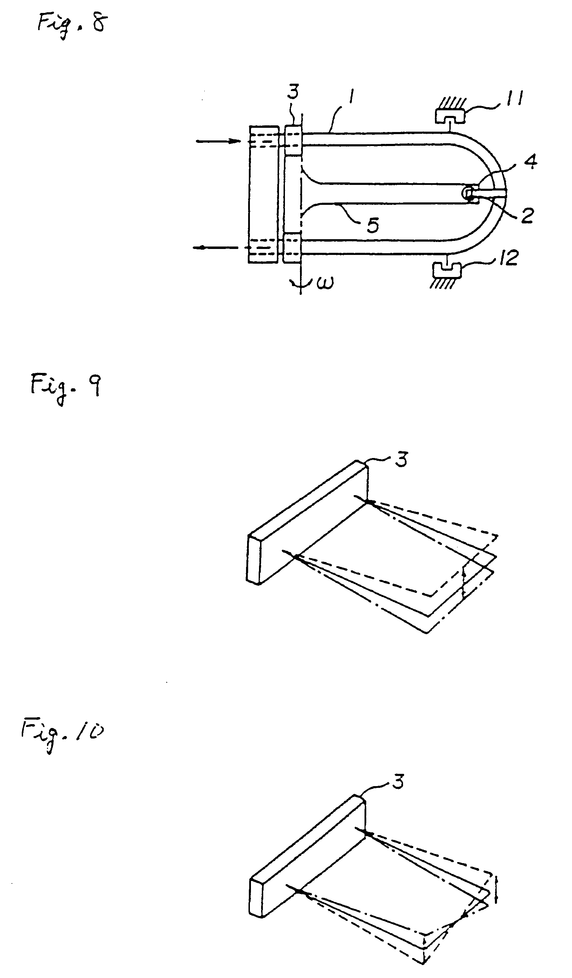

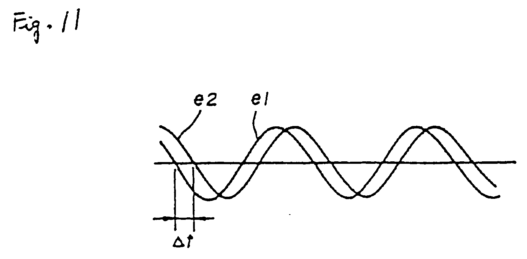

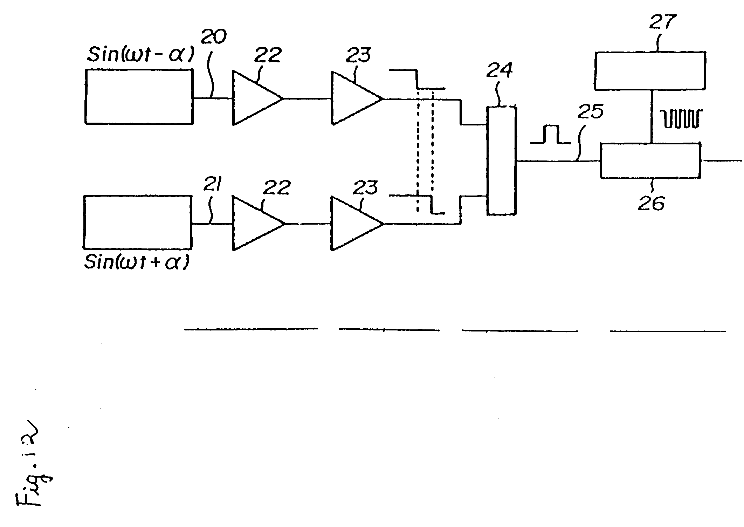

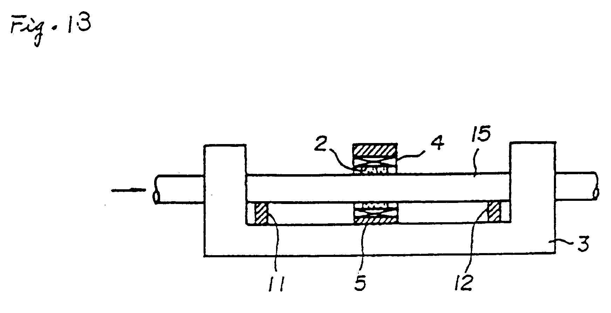

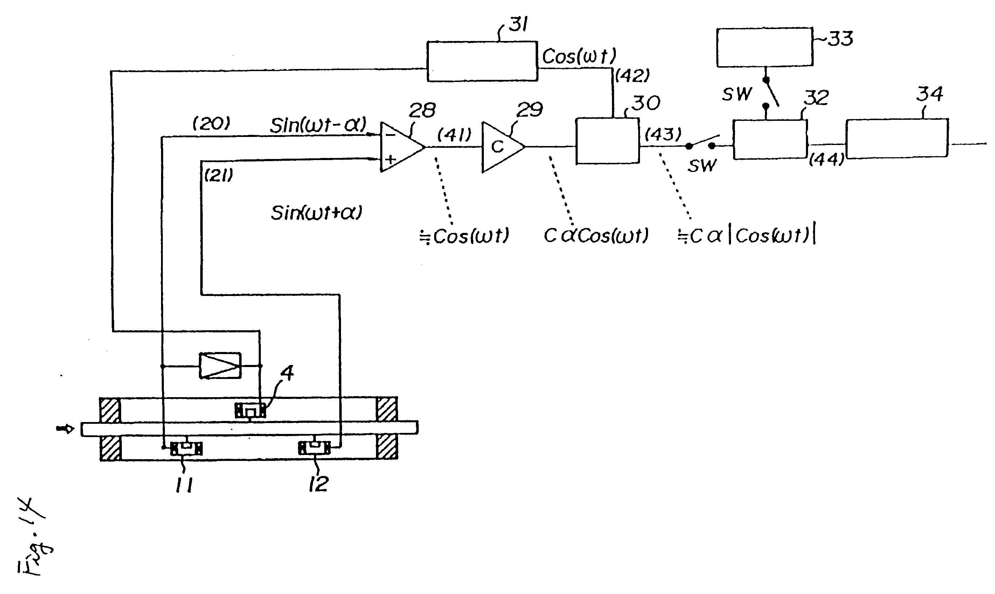

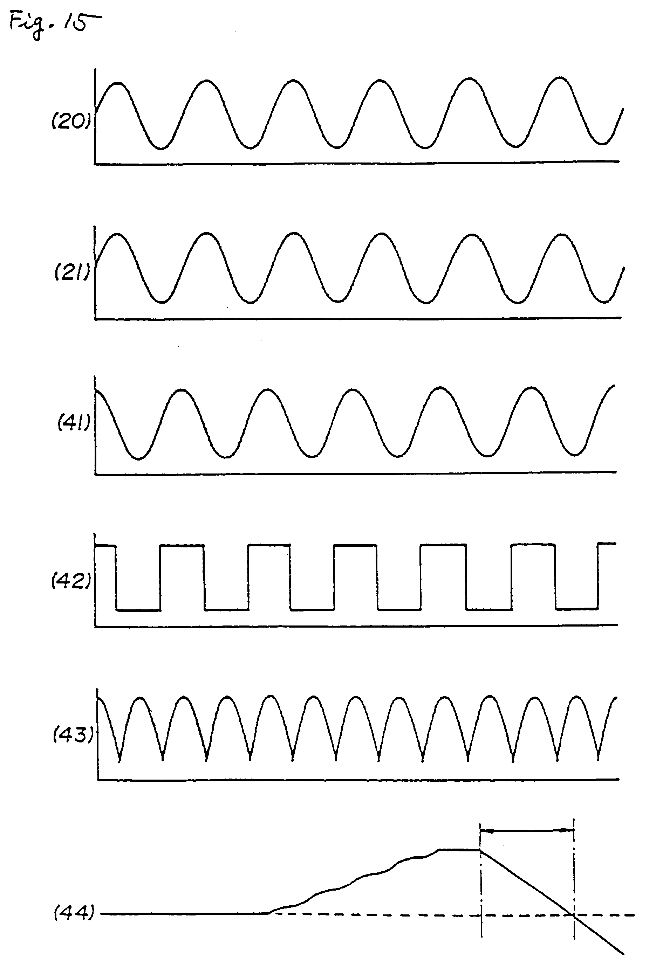

Figure 1 is a diagram showing a basic configuration for tube vibration detection;

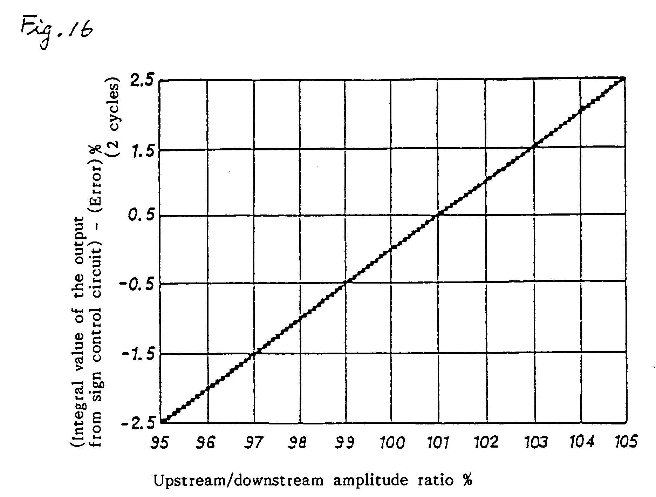

Figure 2 is a diagram showing a main portion of an embodiment constructed by using the basic configuration of Figure 1;

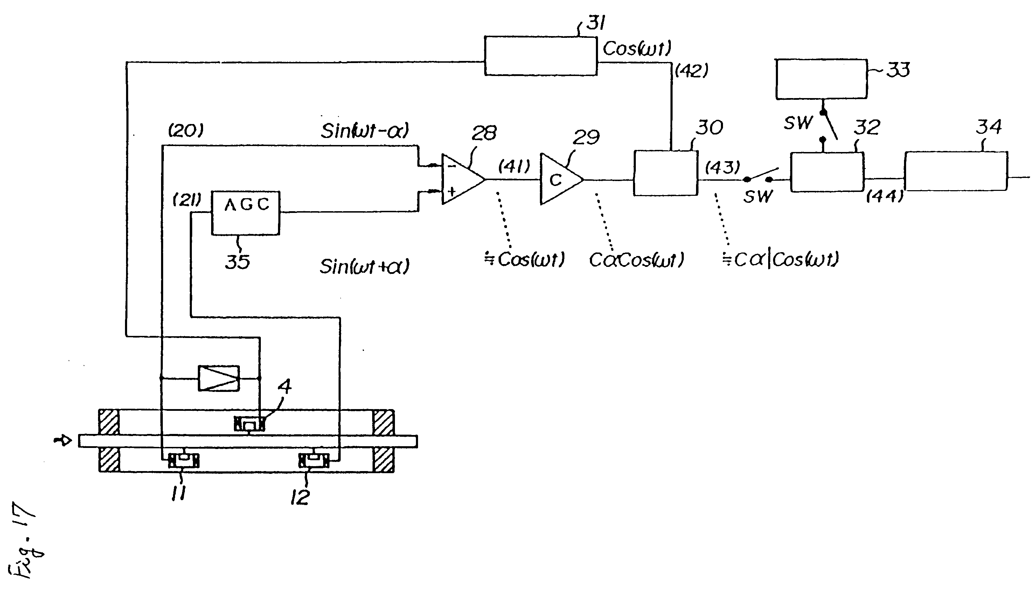

Figure 3 is a block diagram showing a circuit for controlling the sensors of Figure 2;
Figure 4 is a diagram showing another basic configuration for tube vibration detection;

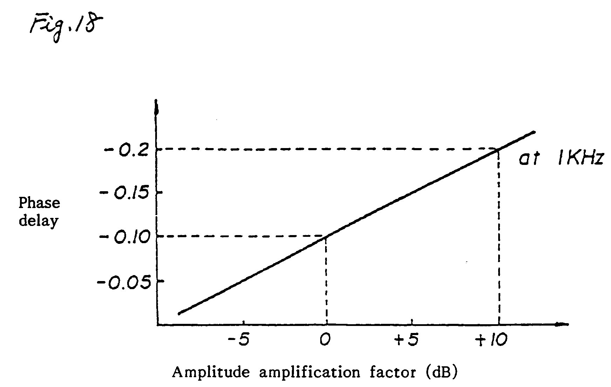

Figure 5 is a diagram showing a main portion of an embodiment constructed by using the basic configuration of Figure 4;

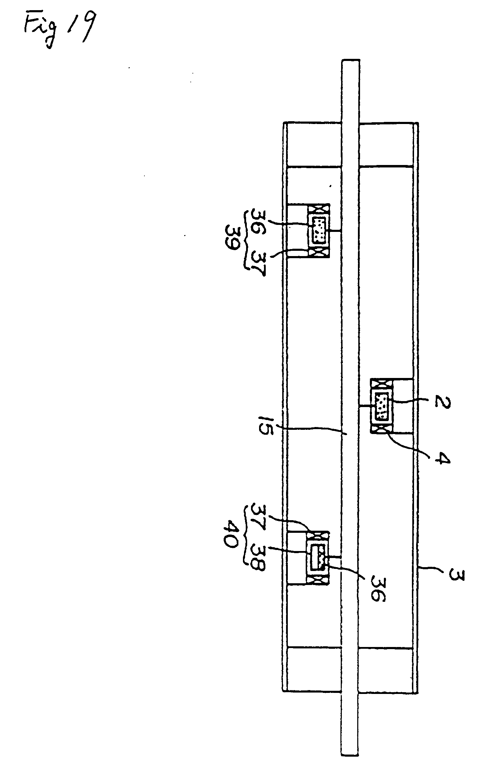

Figure 6 is a diagram showing a main portion of another embodiment;
Figure 7 is a diagram showing a main portion of still another embodiment;
Figure 8 is a diagram showing an operating principle of the general Coriolis type mass flow meter;
Figure 9 is a diagram showing a bending vibration mode of a U-shaped measuring tube;
Figure 10 is a diagram showing a torsional vibration mode of a U-shaped measuring tube;
Figure 11 is a wave chart showing examples of pickup signals;
Figure 12 is a block diagram showing a circuit for phase difference detection according to the counter method;
Figure 13 is a diagram showing an example of a straight tube Coriolis type mass flow meter;
Figure 14 is a block diagram showing a circuit for differential phase difference detection;
Figure 15 is a chart showing waveform of major parts of Figure 14;
Figure 16 is a chart for explaining measurement error in the circuit of Figure 14;
Figure 17 is a block diagram showing a circuit modified from Figure 14;
Figure 18 is a chart showing AGC delay in the AGC amplifier of Figure 17;
Figure 19 is a diagram showing a configuration of the proposed Coriolis type mass flow meter;
Figure 20 is a block diagram showing a circuit for controlling the mass flow meter of Figure 19; and
Figure 21 is a block diagram showing a circuit modified from Figure 19.

Figure 1 is a diagram showing a basic configuration for tube vibration detection. In Figure 1, reference numeral 70 designates an excitation coil, 71 an induction coil, and 72 a ferromagnetic member.

The excitation coil 70 and the induction coil 71 are fabricated by winding wiring round a cylindrical bobbin. The excitation and induction coils are fixed to the base 3 by support structures, not shown, with the top end face of one of the coils in close contact with the bottom end face of the other coil. The ferromagnetic member 72 is formed into a circular column. The ferromagnetic member 72 is fixed to the tube 15 by a support structure, not shown, with its central axis aligned with the central axes of the excitation and induction coils 70 and 71.

When the tube 15 vibrates, the ferromagnetic member 72 performs vertical motion on the central axes of the excitation and induction coils 70 and 71. The excitation coil 70 generates magnetic flux by virtue of a constant DC current supplied from a variable DC current supply 74. The majority of the magnetic flux passes through the moving ferromagnetic member 72. The vertical motion of the ferromagnetic member 72 varies the magnetic flux which interlinks the induction coil 71 and the variation rate of the magnetic flux with time induces an output voltage V from the induction coil 71.

The induced voltage V is expressed by the following equation:$\text{Induced voltage V = dΦ/dt = dM/dt.I∝I.ω.cos(ωt - α)}$
where Φ designates magnetic flux interlinking the induction coil, I an excitation current flowing through the excitation coil, and M the mutual inductance between the excitation and the induction coils which varies with the position sin(ωt - α) of the ferromagnetic member.

The above equation shows that the amplitude of the induced voltage V generated in the induction coil can be varied by controlling the excitation current I flowing through the excitation coil with the variable DC current supply 74. The induced voltage advances by 90 degrees when the vibration of the tube is expressed by sin(ωt - α).

Figure 2 is a diagram showing a main portion of an embodiment constructed by using the basic configuration of Figure 1.

As shown in Figure 2, one of the upstream and downstream tube vibration velocity detection sensors (right hand side of the Figure) comprises the permanent magnet 2 disposed on the side of the tube 15 and the induction coil 75 disposed on the side of the base 3. The output voltage amplitude of the induction coil 75 is fixed at a constant value. Another sensor (left hand side of the Figure) comprises the ferromagnetic member 72 disposed on the side of the tube 15, the excitation coil 70 and the induction coil 71. Both the coils 70 and 71 are disposed on the side of the base 3. The output voltage amplitude of the induction coil 71 is controlled to be coincident with the output voltage amplitude of the induction coil 75 by adjusting the DC current flowing through the excitation coil 70. Figure 3 shows a circuit block diagram for the sensors of Figure 2. Since the circuit of Figure 3 is essentially the same as that of Figure 20 except for the configuration of the sensors, explanation of Figure 3 is omitted.

Figure 4 is a diagram showing another basic configuration for tube vibration detection.

In Figure 1, the length of the ferromagnetic member 72 should be longer than the total axial length of the excitation and induction coils 70 and 71. In Figure 4, the length of the ferromagnetic member 72 may be as long as that of the self-induction coil 76. The self-induction coil 76 is fabricated by winding wiring round a cylindrical bobbin, and is fixed to the base 3 by a support structure, not shown.

The ferromagnetic member 72 is formed as a circular column, and is fixed to the tube 15 by a support structure, not shown, with its central axis aligned with the central axis of the cylindrical bobbin of the self-induction coil 76. The ferromagnetic member 72 oscillates vertically in response to the vibration of the tube 15 on the central axis of the cylindrical bobbin of the self-induction coil 76. The self-induction coil 76 generates magnetic flux by virtue of a current set with a variable DC current supply. The majority of the magnetic flux passes through the moving ferromagnetic member 72. The vertical motion of the ferromagnetic member 72 varies magnetic resistance of the self-induction coil, which further varies self-inductance of the coil 76.

Voltage induced across the self-induction coil 76 corresponds, as is expressed by the following equation, to the self-inductance:$\text{Induced voltage V = dL/dt.I∝I.ω.cos(ωt - α)}$
where I designates an excitation current flowing through the self-induction coil, and L the self-inductance of the self-induction coil which varies with position sin(ωt - α) of the ferromagnetic member.

Figure 5 is a diagram showing a main portion of an embodiment constructed by using the basic configuration of Figure 4.

As shown in Figure 4, one of the upstream and downstream tube vibration velocity detection sensors (right hand side of the Figure) comprises the permanent magnet 2 disposed on the side of the tube 15 and the induction coil 75 disposed on the side of the base 3. The output voltage amplitude of the induction coil 75 is fixed at a constant value. Another sensor (left hand side of the Figure) comprises the ferromagnetic member 72 disposed on the side of the tube 15 , and the self-induction coil 76 disposed on the side of the base 3. The output voltage amplitude of the self-induction coil 76 is controlled to be coincident with the output voltage amplitude of the induction coil 75 by adjusting the DC current flowing through the self-induction coil 76.

In Figure 1, one of the upstream and downstream tube vibration velocity detection sensors (right hand side of the Figure) comprises the permanent magnet 2 disposed on the side of the tube 15 and the induction coil 75 disposed on the side of the base 3, and another sensor (left hand side of the Figure) comprises the ferromagnetic member 72 disposed on the side of the tube 15, the excitation coil 70 and the induction coil 71. Both the coils 70 and 71 are disposed on the side of the base 3. It is very difficult to manufacture the sensors since the centre of gravity and the weight of the permanent magnet and those of the ferromagnetic member should precisely balance each other. An embodiment of Figure 6 avoids this difficulty.

In Figure 6, both upstream and downstream tube vibration velocity detection sensors comprise the ferromagnetic member 72 disposed on the side of the tube 15, and excitation and induction coils 70 and 71, disposed on the side of the base 3. The output voltage amplitude of one of the induction coils 71 is fixed at a constant value by a constant DC current flowing through on of the excitation coils corresponding to that induction coil. A DC current flowing through the other excitation coil 70 is adjusted to equalise the output voltage amplitude value of the other induction coil with the output voltage amplitude value of the first-mentioned induction coil. The configuration of Figure 6 facilitates stable vibration of the tube since the upstream and downstream tube vibration velocity detection sensors, which have exactly the same configuration, are symmetrically positioned.

Figure 7 shows a modification of Figure 5.

In Figure 7, as in Figure 6, both upstream and downstream tube vibration velocity detection sensors comprise a ferromagnetic member 72 disposed on the side of the tube 15, and a self-induction coil 76 disposed on the side of the base 3. The output voltage amplitude of one of the self-induction coils 76 is fixed at a constant value by a constant DC current flowing through it. A DC current flowing through the other self-induction coil 76 is adjusted to equalise the output voltage amplitude values of the self-induction coils with each other. The control circuit of Figure 3 is used for controlling the sensors of Figures 5, 6 and 7.

As has been explained, the Coriolis type mass flow meter according to the present invention, which comprises a ferromagnetic member disposed on the tube side, and a self-induction coil or a pair formed by an excitation coil and an induction coil disposed on the base side, avoids both lowering of the mechanical Q of the vibrating system and the appearance of time delay in AGC. As a result, the Coriolis type mass flow meter of this invention measures the phase difference between the output signals of the detection coils with a resolution of 0.1 nS.

## Claims

1. A Coriolis type mass flow meter, including first and second electromagnetic velocity detectors which detect asymmetric bending vibrations of a vibrating tube, which depend on mass flow rate and are excited in association with torsional vibrations of said tube vibrated by Coriolis force generated by flow of a fluid through said tube and angular vibrations of said tube; a control means for automatically equalizing output voltage amplitude of the first detector to the output voltage amplitude of the second detector; and a means for measuring mass flow rate of the fluid by detecting phase difference between the output waveforms of said detectors, wherein:
the first detector further comprises a ferromagnetic member mounted on the tube, an excitation coil, and a first induction coil, said excitation and first induction coils being mounted on a base;
the second detector comprises a permanent magnet mounted on the tube, and a second induction coil mounted on the base, the output voltage amplitude of the second induction coil being fixed; and
the control means controls an input DC current to said excitation coil to vary the intensity of the magnetic field generated by said excitation coil, whereby the output voltage amplitude of the first induction coil and the output voltage amplitude of said second induction coil are equalised.

2. A Coriolis type mass flow meter, including first and second electromagnetic velocity detectors which detect asymmetric bending vibrations of a vibrating tube, which depend on mass flow rate and are excited in association with torsional vibrations of said tube vibrated by Coriolis force generated by the flow of a fluid through said tube and angular vibrations of the tube; a control means for automatically equalising the output voltage amplitude of the first detector and the output voltage amplitude of the second detector; and a means for measuring mass flow rate of the fluid by detecting phase difference between the output waveforms of the detectors, wherein:
the first detector further comprises a ferromagnetic member mounted on the tube and a self-induction coil mounted on a base;
the second detector further comprises a permanent magnet mounted on the tube, and an induction coil mounted on the base, the output voltage amplitude of the induction coil being fixed; and
the control means controls an input DC current to the self-induction coil to vary the intensity of a magnetic field generated by the self-induction coil, whereby the output voltage amplitude of the self-induction coil and the output voltage amplitude of said induction coil are equalised.

3. A Coriolis type mass flow meter, including first and second electromagnetic velocity detectors which detect asymmetric bending vibrations of a vibrating tube, which depend on mass flow rate and are excited in association with torsional vibrations of the tube vibrated by Coriolis force generated by the flow of a fluid through the tube and angular vibrations of the tube; a control means for automatically equalising the output voltage amplitude of the first detector and the output voltage amplitude of the second detector; and a means for measuring mass flow rate of the fluid by detecting phase difference between the output waveforms of the detectors, wherein:
the first detector comprises a first ferromagnetic member mounted on the tube, a first excitation coil, and a first induction coil, the first excitation and induction coils being mounted on a base;
the second detector comprises a second ferromagnetic member mounted on the tube, a second excitation coil, and a second induction coil, the second excitation and induction coils being mounted on said base; and
the control means fixes an input DC current to the second excitation coil at a fixed value to maintain the output voltage amplitude of the second induction coil at a fixed value, and controls an input DC current to the first excitation coil to vary the intensity of a magnetic field generated by the first induction coil, whereby the output voltage amplitude of the first induction coil and the output voltage amplitude of the second induction coil are equalised.

4. A Coriolis type mass flow meter, including first and second electromagnetic velocity detectors which detect asymmetric bending vibrations of a vibrating tube, which depend on mass flow rate and are excited in association with torsional vibrations of the tube vibrated by Coriolis force generated by the flow of a fluid through the tube and angular vibrations of the tube; a control means for automatically equalising the output voltage amplitude of the first detector and the output voltage amplitude of the second detector; and a means for measuring mass flow rate of the fluid by detecting phase difference between the output waveforms of the detectors, wherein:
the first detector comprises a first ferromagnetic member mounted on the tube and a first self-induction coil mounted on a base;
the second detector comprises a second ferromagnetic member mounted on the tube and a second self-induction coil mounted on the base; and
the control means fixes an input DC current to the second self-induction coil at a fixed value to maintain the output voltage amplitude of the second self-induction coil at a fixed value and controls an input DC current to the first self-induction coil to vary the intensity of a magnetic field generated by the first self-induction coil, whereby the output voltage amplitude of the first self-induction coil and the output voltage amplitude of the second self-induction coil are equalised.
